**Europäisches Patentamt**

(19) **European Patent Office**

**Office européen des brevets**

(11) Publication number : **0 363 114 B1**

(12) # EUROPEAN PATENT SPECIFICATION

(45) Date of publication of patent specification :
02.12.92 Bulletin 92/49

(51) Int. Cl.⁵ : **G01B 7/08,** B07C 5/12,
G01B 7/06, B07C 5/34

(21) Application number : 89310033.9

(22) Date of filing : 02.10.89

(54) **Glass container inspection apparatus.**

(30) Priority : 05.10.88 US 253833
05.10.88 US 253832

(43) Date of publication of application :
11.04.90 Bulletin 90/15

(45) Publication of the grant of the patent :
02.12.92 Bulletin 92/49

(84) Designated Contracting States :
DE FR GB IT

(56) References cited :
DE-A- 3 611 536
FR-A- 2 163 117
FR-A- 2 435 696
US-A- 3 684 089

(73) Proprietor : **Emhart Glass Machinery Investments Inc.**
**c/o RL&F Service Corp. One Rodney Square, 10th Floor 10th and King Streets Wilmington, Delaware 19801 (US)**

(72) Inventor : **Baker, Russ J.**
**132 Overlook Drive**
**Horseheads New York 14845 (US)**
Inventor : **Hansen, Robert A.**
**P.O. Box 1902**
**Elmira New York 14902 (US)**
Inventor : **Scott, Paul F.**
**19 Capitol Avenue**
**Hartford Connecticut 06106 (US)**
Inventor : **Vozenilek, Edward F.**
**511 Pinewood Circle**
**Elmira New York 14901 (US)**

(74) Representative : **Wetters, Basil David Peter et al**
**Emhart Patents Department Lyn House 39 The Parade**
**Oadby, Leicester LE2 5BB (GB)**

EP 0 363 114 B1

## Description

The present invention relates to apparatus for inspecting the wall thickness of round containers such as glass bottles.

European Patent Application 300,616, applied for before the priority date of the present application but not published until after that date, discloses a glass container inspection apparatus for measuring the thickness of the wall of a bottle by use of a sensor in the form of an elongated electrode which is resiliently pressed against the bottle while the bottle is rolled along the electrode.

In use of such an apparatus, when a seam on the bottle rolls past the sensor, a false 'thick spot' signal will generally be generated as the seam approaches and a false 'thin spot' signal once the seam is at the sensor and immediately after. Such apparatus therefore detects the seam by determining the rate of change or differential of periodic thickness samples, and whenever this differential exceeds a selected threshold, a seam has been detected and a timer which has a fixed period is started. Subsequent samples received during the window of this timer are ignored.

Such an arrangement has two disadvantages. Firstly, when the speed at which the apparatus operates is changed, the setting of the timer also requires to be changed. Secondly, the unwanted readings caused by an approaching seam are not ignored.

It is an object of the invention as defined in the claims to overcome the above disadvantages. According to the invention defined in the claims a glass container inspection apparatus for inspecting the thickness of a wall of a container by use of sensing means which produces a signal representative of the thickness of the wall of a container presented to it and comprising means for presenting a glass container to the sensing means so that its wall thickness may be sensed, characterized in that; the presenting means for the container is arranged to move the container past the sensing means so that successive portions of the wall of the container are sensed by the sensing means and the sensing means generates a continuous signal representative of the thickness of the portion of the wall sensed by the sensing means, and the apparatus comprises; encoding means for issuing pulses corresponding to the movement of the container past the sensing means; means for sampling the signal whenever the encoding means issues a pulse during a predetermined sampling period; means for detecting the presence of a wall seam at the sensing means; means for disregarding the sampled signal for a first selected number of pulses occurring prior to the detection of a seam and means for disregarding the sampled signal for a second selected number of pulses occurring after detection of the seam.

Preferably in an apparatus according to the invention the sensing means comprises a capacitance sensing means. Preferably the capacitance sensing means comprises an elongated sensor and the presenting means is arranged to roll the container along the sensor.

There now follows a description, to be read with reference to the accompanying drawings, of a preferred embodiment of a glass container inspection apparatus chosen to illustrate the invention by way of example.

In the accompanying drawings:

Figure 1 shows, diagrammatically, an inspection station of a glass container inspection apparatus;

Figure 2 is a logic diagram illustrating the operation of a controller of the apparatus to determine whether or not a container should be rejected;

Figure 3 shows, diagrammatically, mechanism for moving containers through the inspection station;

Figure 4 is a logic diagram illustrating steps to eliminate the effect of a side seam on inspection;

Figure 5 shows a container with a side seam and diagrammatically the effect of the logic illustrated in Figure 4;

Figure 6 is a schematic diagram illustrating the electronic circuit of the inspection apparatus.

The illustrative glass container inspection apparatus is for measuring the thickness of a wall of a container, for example a round glass bottle, by use of capacitance sensing means which produces a signal representative of the thickness of the wall of a bottle presented to it.

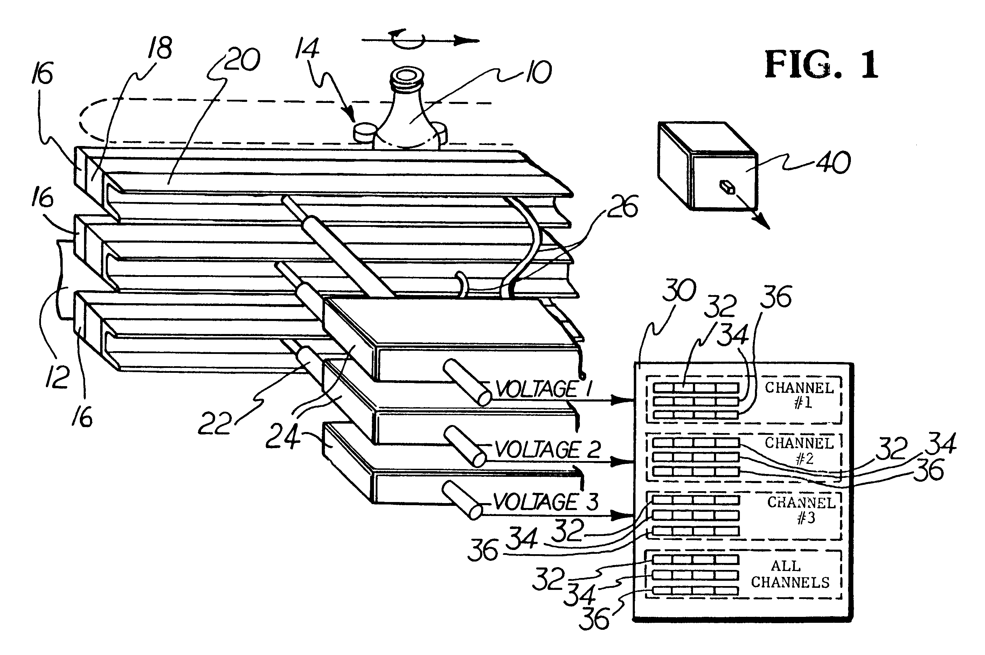

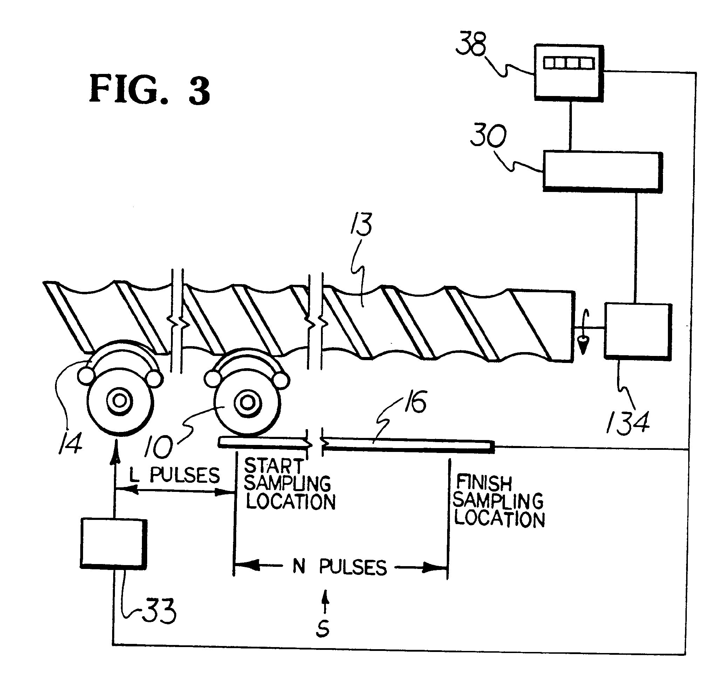

The illustrative apparatus comprises means for presenting a glass bottle to the sensing means so that its wall thickness may be sensed comprising bottle carriers 14 (Figures 1 and 3) which engage round glass bottles 10 supported on a plate 12. The carriers 14 are engaged by an elongated cam 13 which is rotated at a constant speed to carry the bottles in turn through an inspection station S. As each carrier 14 carries a bottle 10 through the inspection station S it rolls the bottle along a number (three as illustrated in Figure 1 for purposes of clarity, but four are normally used) of parallel horizontally extending, vertically spaced, elongated capacitance sensors 16 in the form of strips which are secured to resilient foam strips 18 mounted on suitable brackets 20. The brackets are connected by posts 22 to corresponding head oscillator assembly housings containing oscillator assemblies 24. Each oscillator assembly 24 receives a capacitance signal from its associated capacitance sensor 16 via a calibrated cable 26 and generates a continuous voltage signal which is supplied to a computer 30.

When the cam 13 carries a carrier 14 towards the inspection station S a start position of the carrier 14 is sensed by a suitable sensor 33. The rotational position of the cam 13 is monitored by an encoder 134 the encoder reading when the carrier 14 is at the start position is defined as the start pulse by the computer 30. As the cam continues to advance the carrier 14, a captured bottle 10 will be translated towards the right until the bottle engages the capacitance sensor 16 and reaches the beginning of the inspection station, as defined by a selected encoder pulse count (L). The sampling will then begin with a data sample being evaluated by the computer 30 at each subsequent count until the count reaches a selected number (N) which assures that the entire periphery of the bottle has been sampled (the Finish Sampling Location). For smaller bottles, a portion of this peripheral ring may be analysed twice. The operator inputs the diameter of the bottle via a hand held terminal or the like 38, and the computer sets the correct number (N) of pulses for the bottle.

The computer 30 of the illustrative apparatus comprises an array of settable though wheel switches 32, 34, 36 associated with each capacitance sensor, the switches 32 being adapted for setting a minimum wall thickness, the switches 34 a maximum wall thickness and the switches 36 a minimum/maximum wall thickness ratio.

Glass thickness measurements are made using each sensor 16 and cable 26 which have a capacitance about 50 pf without glass being sensed. The sensitivity of the sensor 16 to glass is about 0.002 pf of capacitance for each $2.54 \times 10^{-3}$cm of glass and decreases as glass thickness increases.

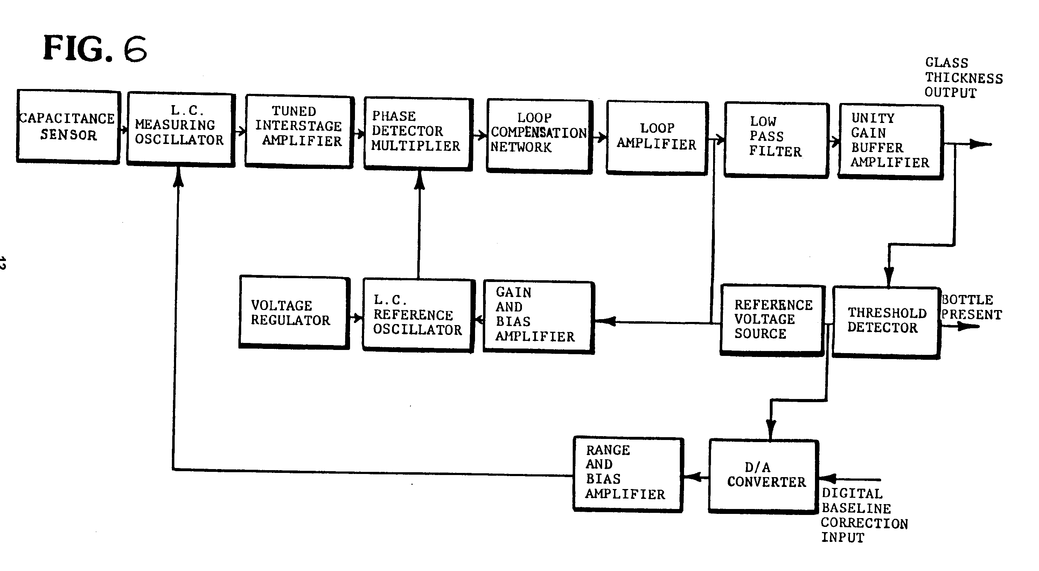

Each oscillator assembly 24 comprises [see Figure 6] a capacitance tuned Measuring Oscillator (a transformer coupled LC oscillator) formed by placing the sensor 16 in parallel with a ferrite pot core inductor which has an extra winding for feed-back. This measuring oscillator is tuned by the capacitance of the sensor and accordingly converts small changes in capacitance (a change in bottle thickness) to small changes in frequency. This output frequency is passed to a Tuned Interstage Amplifier which rejects signals that are outside the frequency range of interest. A capacitance tuned Reference Oscillator which is identical to the Measuring Oscillator is formed using an identical inductor and a stable capacitor that equals the no glass capacitance of the sensor and cable assembly.

To each oscillator is added some additional capacitance in the form of a varactor (a capacitor in series with a reversed biased tuning diode). The network values are chosen so that the diode can be biased by means of a biasing resistor over a range of voltages (from -3 to -10 volts). The value of the capacitance change due to the network and varactor is chosen to be approximately equal to the change in capacitance for the largest glass thickness expected.

Preferably the varactor bias of the Measuring Oscillator is set as a starting point approximately to the mid-point of its range and the bias of the varactor in the Reference Oscillator is set to its minimum point (-10 volts in the above example).

As will now be described, the computer 30 is arranged to be responsive to reject bottles if the signals produced by the sensors 16 indicate that the thickness of the wall of the container is, at any sensed point, greater than a selected maximum value or less than a selected minimum value or if the ratio of the signals representing the minimum sensed wall thickness to the maximum wall thickness is lower than a selected value.

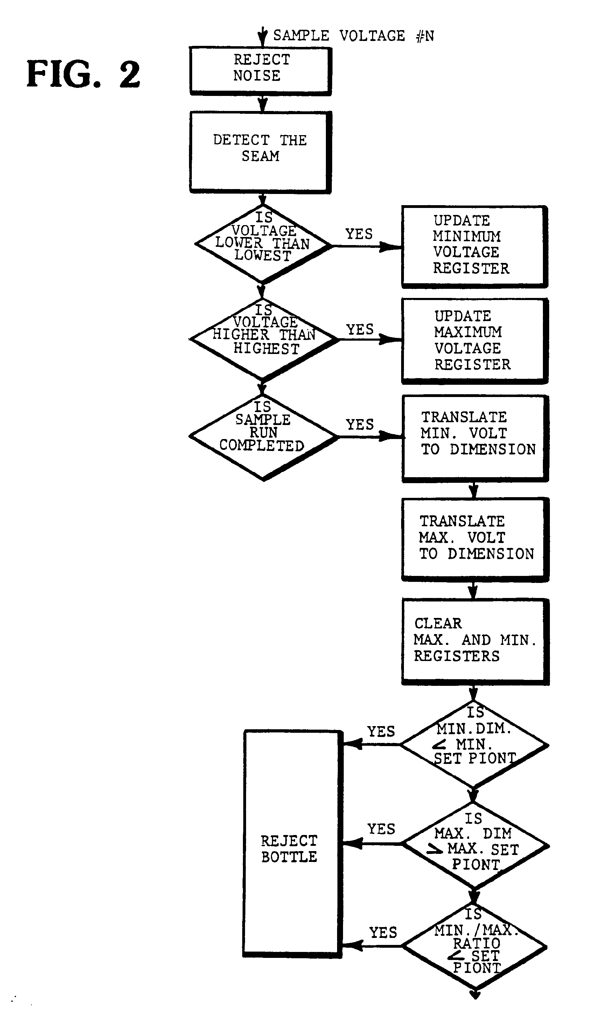

As can be seen from the logic diagram illustrated in Figure 2, in the computer 30 the voltage signal generated by each oscillator assembly is processed to Reject Noise (by averaging, for example). A Detect The Seam circuit determines that data in the vicinity of a seam is being generated and ignores this data which would produce a false thin spot reading, as will be described in more detail later. Two to three hundred readings or data samples are taken around the bottle at each sensor and then evaluated to identify the lowest and highest voltage around the bottle. These voltages are stored in suitable registers which are updated whenever a lower or higher voltage is sensed until readings have been taken completely around the bottle. A highest voltage and lowest voltage register can be provided for each sensor (channel) and a highest and lowest register can be provided for the data of all the sensors (channels). At this time, the voltage which represents the thinnest spot around the tested periphery (either for one or for all channels) and the voltage which represents the thickest spot around the tested periphery (either for one or for all channels) are converted via suitable A/D converters to dimensions (millimeter for example) and the registers are cleared for the next bottle. If the minimum dimension is less than the minimum set point, or if the maximum dimension is higher than the maximum set point or if the minimum to maximum ratio for these two dimensions is less than the minimum to maximum set point, the bottle will be rejected by a suitable reject mechanism 40, diagrammatically indicated in Figure 1.

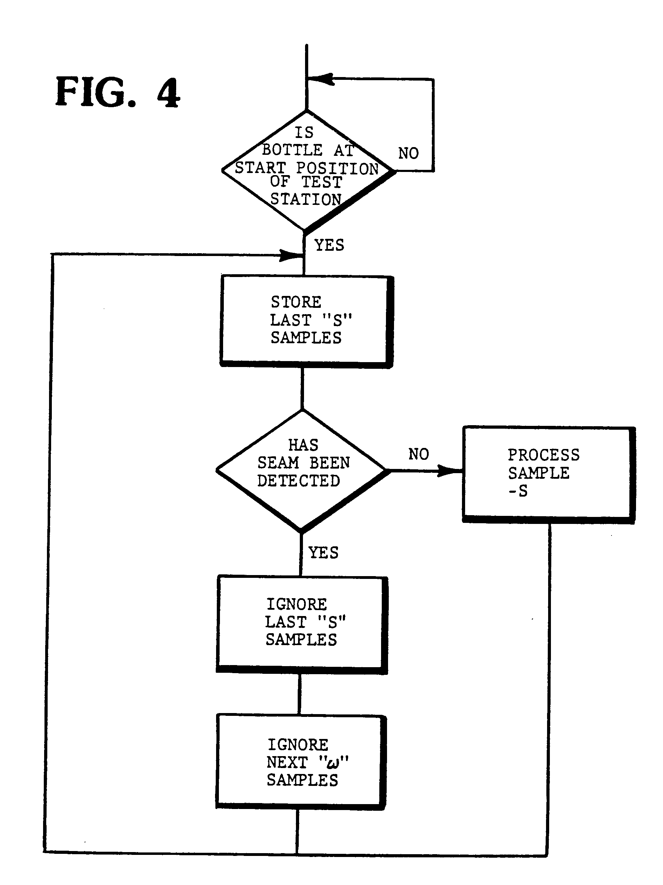

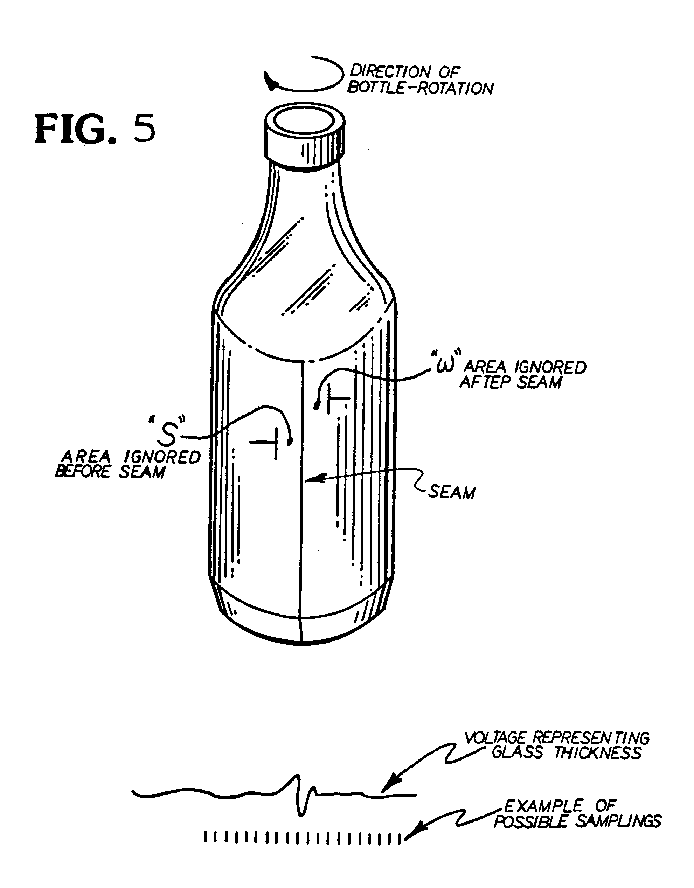

As can be seen from Figures 4 and 5, the last "S" (four, for example) data samples are stored in a Store Case "S" Sample and each time a new data sample is placed in storage, the oldest data sample will accordingly be evaluated at each pulse until the bottle wall seam has been detected by the computer 30 in a conventional manner; i.e. the computer 30 determines the rate of change or differential of the voltage representing glass thickness and whenever this differential exceeds a selected threshold, a seam has been detected. Thus the computer 30 includes a seam detector means. At this time, all the sample data in the Store Case "S" samples will be ignored as will future data samples for a "W" pulse count. "S" and "W" are settable, via a conventional computer input such as a keyboard, to cover a selected window during which seam data would normally be evaluated. Following the counting of "W" pulses, the sample data will again be evaluated each pulse until the Finish Sampling Location is reached.

Returning now to a more complete description of the capacitative wall thickness sensing circuit of Figure 6. A Phase Locked Loop is formed to adjust the voltage to exactly match the capacitance of the sensor and glass to the reference capacitance (the varactor) of the Reference Oscillator by coupling the two oscillator outputs with a Phase Detector Multiplier. The detected phase is fed to a Loop Compensation Network (a band width shaping filter) and Amplifier. Due to the gain of the Amplifier, a small error in phase will result in a substantial output voltage. The Loop is closed through a Gain and Bias Amplifier which is set as follows: When the amplifier output is at the desired minimum (0 volts in the illustrated case), the varactor is set to minimum capacitance (-10 volts to the varactor). The gain is set so that the desired maximum out of the amplifier (5 volts) sets the varactor to the maximum capacitance (-3 volts to the varactor).

The Phase Locked Loop is closed to force the Measuring Oscillator and the Reference Oscillator to operate at exactly the same frequencies. When no glass is sensed by the sensor, the frequencies are equal when the Reference Oscillator varactor is at minimum, so that the output of the Loop Amplifier is zero. As glass is sensed by the sensor, the output of the Loop Amplifier causes the varactor in the Reference Oscillator to change capacitance an amount exactly equal to the change in the Measuring Oscillator capacitance due to the glass wall thickness. The capacitance versus voltage characteristics of the varactor are known, and accordingly, this data can be inverted to form a voltage versus capacitance chart. Varactor capacitance varies slowly as a function of applied voltage. This chart is further shifted to a more convenient voltage scale by the action of the Gain and Bias Amplifier.

The varactor voltage versus capacitance curve is non-linear. A shift in the bias point of the varactor would cause an undesirable shift in scale factor within this scheme. Accordingly, when changes occur that shift the no glass value from the desired set point, a change in voltage is made to the varactor in the Measuring Oscillator. Since the predominant changes that occur are due to temperature, the control input can be referred to as the temperature compensating input. This preserves the scale of the phase locked output.

The glass thickness signal is obtained by passing the output of the Phase Locked Loop through a limiting Low Pass Filter and a Unity Gain Buffer Amplifier. From there, it goes to an A/D Converter and thence to the computer.

Samples that correspond to no glass are processed through a feedback algorithm that makes adjustments to a D/A converter. This keeps the base frequency of both Oscillators at the same frequency, i.e.,

when no glass is present, the frequency will remain fixed at a selected value even with temperature changes and stray capacitance.

The Measuring Oscillator is applied as the input to a phase lock Loop where the Reference Oscillator is used as the voltage controlled oscillator (VCO) because the phase locked loop tunes the VCO allowing no steady state frequency error between it and the input frequency, the capacitance of the reference capacitance must precisely match the capacitance of the sensor/bottle combination. The voltage across the reference provides a good representation of the bottle's wall thickness, limited in practice only by the match between the Measuring Reference Oscillators and by the temperature drift coefficient and sensitivity of the varactor.

Since there is a non-linear change in capacitance as a function of thickness over the range provided by glass containers, the computer comprises a linearizer which is arranged to adjust the voltage output of the measuring oscillator means so that the voltage is linearly related to the sensed wall thickness.

The linearizer uses basic non-linear regression techniques combined with a "good sense" model of the capacitance-wall thickness relationship. While regression techniques are well known, it is also well known that their success depends on a correct choice of model. If the model does not represent the data with sufficient accuracy, the results of the regression will not be accurate. Also, it is very difficult to postulate a "good" model. The relationship between the sensor capacitance and the wall thickness of the container is very non-linear. This situation cannot be improved by better sensor design because the required circumferential resolution of the measurement is of the same order of magnitude as the wall thickness. Thus, the electric fields in the container must fall-off substantially over the range of container wall thicknesses, creating a proportionately non-linear capacitance function. The relationship between wall thickness and capacitance cannot be obtained analytically as it is a three-dimensional solution of Maxwell's equations for highly non-idealized geometries. Computer numerical solutions are possible, and while these provide insight into sensor design, they are too cumbersome and time consuming to use in a wall thickness instrument to determine the thickness value corresponding to a measured capacitance. However, as the relationship between thickness and capacitance must be linear for small thickness and as the thickness increases, the capacitance will approach some "infinite thickness" value. Assuming that the "cross-over" point between these two solutions occurs at a thickness value on the order of half the probe spacing a model can be proposed which has been shown empirically to represent wall thickness data very well. This model is as follows:

$$C(T) = A \times T / (1 + B \times T)$$

where:

C is the measured capacitance, T is the wall thickness, A is a coefficient describing the small thickness, linear relationship and B is a coefficient describing the large thickness, non-linear relationship. The "infinite thickness" capacitance is A/B and cross-over wall thickness is 1/B. This model is also easy to employ in a wall thickness device because "pseudo" linear regression techniques can be used to calculate A and B from two or more known pairs (for example determined experimentally) of C and T. The model can also be used to express T in terms of C, i.e.

$$T = \frac{C}{A - BC}$$

## Claims

1. A glass container inspection apparatus for inspecting the thickness of a wall of a container by use of sensing means (16) which produces a signal representative of the thickness of the wall of a container presented to it and comprising means for presenting a glass container to the sensing means so that its wall thickness may be sensed; characterized in that the presenting means for the container is arranged to move the container past the sensing means so that successive portions of the wall of the container are sensed by the sensing means and the sensing means generates a continuous signal representative of the thickness of the portion of the wall sensed by the sensing means, and the apparatus comprises;

   encoding means for issuing pulses corresponding to the movement of the container past the sensing means; means for sampling the signal whenever the encoding means issues a pulse during a predetermined sampling period;

   means for detecting the presence of a wall seam at the sensing means;

   means for disregarding the sampled signal for a first selected number of pulses occurring prior to the detection of a seam;

   and means for disregarding the sampled signal for a second selected number of pulses occuring after detection of the seam.

2. Apparatus according to claim 1, characterized in that the said first and second selected number of pulses may be selected according to the diameter of the container to be inspected.

3. Apparatus according to claim 2, characterized in that the means for selecting the numbers of pulses is operated by inputting the diameter of the container to be inspected.

4. Apparatus according to any one of the preceding claims, characterized in that the sensing means comprises a capacitance sensing means.

5. Apparatus according to claim 4, wherein the capacitance sensing means comprises an elongated sensor and the presenting means is arranged to roll the container along the sensor.

## Patentansprüche

1. Glasbehälter-Prüfapparat zum Überprüfen der Dicke einer Wand eines Behälters unter Verwendung einer Abtasteinrichtung (16), welche ein die Dicke der Wand eines Behälters darstellendes Signal erzeugt, welcher ihr dargeboten wird, mit einer Einrichtung zum Darbieten eines Glasbehälters der Abtasteinrichtung, so daß seine Wanddicke abgetastet werden kann,
   **dadurch gekennzeichnet, daß**
   die Einrichtung zum Darbieten des Behälters angeordnet ist, um den Behälter an der Abtasteinrichtung vorbeizubewegen, so daß aufeinanderfolgende Abschnitte der Wand des Behälters von der Abtasteinrichtung abgetsatet werden und die Abtasteinrichtung ein kontinuierliches, die Dicke des Abschnittes der Wand darstellendes Signal erzeugt, welcher von der Absatteinrichtung abgetastet wird, und

   eine Kodiereinrichtung zum Ausgeben von der Bewegung des Behälters an der Abtasteinrichtung vorbei entsprechenden Impulsen,

   eine Einrichtung zum Prüfen des Signals, wenn immer die Kodiereinrichtung während einer vorbestimmten Prüfperiode einen Impuls abgibt,

   eine Einrichtung zum Anzeigen des Vorhandenseins einer Wandnaht an der Abtasteinrichtung,

   eine Einrichtung zum Nichtbeachten des geprüften Signals für eine erste ausgewählte Anzahl von Impulsen, die vor dem Erfassen einer Naht auftreten,

   und eine Einrichtung zum Nichtbeachten des geprüften Signals während einer zweiten ausgewählten Anzahl von Impulsen vorgesehen sind, die nach dem Erfassen der Naht auftreten.

2. Prüfapparat nach Anspruch 1, dadurch gekennzeichnet, daß die erste und die zweite ausgewählte Anzahl von Impulsen entsprechend dem Durchmesser des zu überprüfenden Behälters auswählbar sind.

3. Prüfapparat nach Anspruch 2, dadurch gekennzeichnet, daß die Einrichtung zum Auswählen der Anzahl der Impulse durch Eingeben des Durchmessers des zu überprüfenden Behälters betätigbar ist.

4. Prüfapparat nach einem der vorhergehenden Ansprüche, dadurch gekennzeichnet, daß die Abtasteinrichtung eine Kapazität-Abtasteinrichtung umfaßt.

5. Prüfapparat nach Anspruch 4 dadurch gekennzeichnet, daß die die Kapazität abtastende Einrichtung einen länglichen Sensor umfaßt und daß die Einrichtung zum Darbeiten so angeordnet ist, daß sie den Behälter längs des Sensors rollt.

**Revendications**

1. Appareil d'inspection de récipients en verre destinés à inspecter l'épaisseur de la paroi d'un récipient en utilisant des moyens capteurs (16) qui produisent un signal représentatif de l'épaisseur de paroi d'un récipient qui lui est présenté et comprenant des moyens destinés à présenter un récipient en verre aux moyens capteurs de manière que son épaisseur de paroi puisse être captée, caractérisé en ce que les moyens de présentation du récipient sont agencés pour faire passer le récipient au droit des moyens capteurs de telle manière que des parties successives de la paroi du récipient soient captées par les moyens capteurs et que les moyens capteurs engendrent un signal continu représentatif de l'épaisseur de la partie de la paroi captée par les moyens capteurs, et en ce que l'appareil comprend :

des moyens codeurs destinés à émettre des impulsions correspondant au mouvement du récipient au droit des moyens capteurs ;

des moyens destinés à échantillonner le signal chaque fois que les moyens codeurs émettent une impulsion pendant une période d'échantillonnage prédéterminée ;

des moyens destinés à détecter la présence d'un joint de la paroi au droit des moyens capteurs ;

des moyens destinés à laisser non pris en compte le signal échantillonné pendant un premier nombre sélectionné d'impulsions qui se produisent avant la détection d'un joint ;

et des moyens destinés à laisser non pris en compte le signal échantillonné pendant un second nombre sélectionné d'impulsions qui se produisent après la détection du joint.

2. Appareil selon la revendication 1, caractérisé en ce que les premier et deuxièmes nombres sélectionnés d'impulsions peuvent être sélectionnés en fonction du diamètre du récipient à inspecter.

3. Appareil selon la revendication 2, caractérisé en ce que les moyens destinés à sélectionner le nombre d'impulsions sont actionnés en "entrant" le diamètre du récipient à inspecter.

4. Appareil selon une quelconque des revendications précédentes, caractérisé en ce que les moyens capteurs comprennent des moyens capteurs de capacité.

5. Appareil selon la revendication 4, dans lequel les moyens capteurs de capacité comprennent un capteur de forme allongée et les moyens de présentation sont agencés pour faire rouler le récipient le long du capteur.

FIG. 1

VOLTAGE 1
VOLTAGE 2
VOLTAGE 3

CHANNEL #1
CHANNEL #2
CHANNEL #3
ALL CHANNELS

EP 0 363 114 B1

**FIG. 2**

SAMPLE VOLTAGE #N

REJECT
NOISE

DETECT THE
SEAM

IS VOLTAGE LOWER THAN LOWEST — YES → UPDATE MINIMUM VOLTAGE REGISTER

IS VOLTAGE HIGHER THAN HIGHEST — YES → UPDATE MAXIMUM VOLTAGE REGISTER

IS SAMPLE RUN COMPLETED — YES → TRANSLATE MIN. VOLT TO DIMENSION

TRANSLATE MAX. VOLT TO DIMENSION

CLEAR MAX. AND MIN. REGISTERS

IS MIN.DIM. $\angle$ MIN. SET PIONT — YES → REJECT BOTTLE

IS MAX. DIM $\angle$ MAX. SET PIONT — YES → REJECT BOTTLE

IS MIN./MAX. RATIO $\angle$ SET PIONT — YES → REJECT BOTTLE

8

# FIG. 3

START SAMPLING LOCATION

FINISH SAMPLING LOCATION

L PULSES

N PULSES

S

# FIG. 4

```
                    IS
                BOTTLE AT
            START POSITION          NO
                OF TEST
                STATION

                  YES

                STORE
                LAST "S"
                SAMPLES

                  HAS
              SEAM BEEN          NO        PROCESS
              DETECTED                     SAMPLE
                                           -S

                  YES

                IGNORE
                LAST "S"
                SAMPLES

                IGNORE
               NEXT "$\omega$"
                SAMPLES
```

FIG. 5

DIRECTION OF
BOTTLE-ROTATION

"ω" AREA IGNORED
AFTEP SEAM

"S"
AREA IGNORED
BEFORE SEAM

SEAM

VOLTAGE REPRESENTING
GLASS THICKNESS

EXAMPLE OF
POSSIBLE SAMPLINGS

# FIG. 6

GLASS THICKNESS OUTPUT

Block diagram showing signal flow: CAPACITANCE SENSOR → L.C. MEASURING OSCILLATOR → TUNED INTERSTAGE AMPLIFIER → PHASE DETECTOR MULTIPLIER → LOOP COMPENSATION NETWORK → LOOP AMPLIFIER → LOW PASS FILTER → UNITY GAIN BUFFER AMPLIFIER.

VOLTAGE REGULATOR — L.C. REFERENCE OSCILLATOR — GAIN AND BIAS AMPLIFIER — REFERENCE VOLTAGE SOURCE — THRESHOLD DETECTOR — BOTTLE PRESENT.

RANGE AND BIAS AMPLIFIER — D/A CONVERTER — DIGITAL BASELINE CORRECTION INPUT.

12